# EUROPEAN PATENT APPLICATION

(11) **EP 4 768 163 A1**
(43) Date of publication of application: **01.07.2026**
(21) Application number: 24859656.1
(22) Date of filing: 23.08.2024
(51) Int. Cl.: B23K 11/11

(54) **SPOT WELDING MEMBER AND METHOD FOR MANUFACTURING SPOT WELDING MEMBER**

(30) Priority: 25.08.2023 JP 2023137103
(71) Applicant: Nippon Steel Corporation, Tokyo 100-8071 (JP)
(72) Inventor: FUJIMOTO, Hiroki, Tokyo 100-8071 (JP); OKADA, Tohru, Tokyo 100-8071 (JP); IMAMURA, Takashi, Tokyo 100-8071 (JP)
(74) Representative: Vossius & Partner Patentanwälte Rechtsanwälte mbB
(86) International application number: PCT/JP2024/030077
(87) International publication number: WO 2025/047623

(57) **Abstract**

A spot-welded member according to one aspect of the present disclosure includes: a first metal sheet and a second metal sheet disposed on surfaces of the spot-welded member and a first internal metal sheet group including one or more internal metal sheets disposed therebetween; a first spot weld joining the first metal sheet and the first internal metal sheet group; and a second spot weld joining the second metal sheet and the first internal metal sheet group, in which an indentation of the first spot weld is provided on the first metal sheet and the internal metal sheet, an indentation of the second spot weld is provided on the first metal sheet and the second metal sheet, and the indentation of the first spot weld is spaced apart from the indentation of the second spot weld, and the first nugget is spaced apart from the second metal sheet and the second nugget is spaced apart from the first metal sheet.

## Description

### TECHNICAL FIELD

The present invention relates to a spot-welded member and a method for manufacturing a spot-welded member.

Priority is claimed on Japanese Patent Application No. 2023-137103 filed in Japan on August 25, 2023, the content of which is incorporated herein by reference.

### BACKGROUND ART

The spot welding is resistance welding in which the metal of the stacked base metal is sandwiched between the tips of the electrodes, a current is applied while applying a pressurizing force, and the metal is melted and joined by the generated Joule heat. In lap resistance welding such as spot welding, a melt-solidified portion generated in a weld is referred to as a nugget.

The spot welding is used for manufacturing various mechanical structural parts because of its very high work efficiency. For example, in the manufacture of an automobile, thousands of spot welds are formed per car. However, the spot welding has the problem that welding defects are likely to occur in a sheet assembly having a large sheet thickness ratio. The sheet assembly refers to a plurality of metal sheets stacked to be spot welded. The sheet thickness ratio of the sheet assembly is a value obtained by dividing the total thickness of the metal sheets of the sheet assembly by the thinner thickness of the metal sheets located on the surface of the sheet assembly.

The nuggets joining the metal sheets are formed at and near the center of the sheet assembly. When the diameter of the nugget is small or the nugget is formed at a position away from the thin sheet on the surface of the sheet assembly, the nugget and the thin sheet on the surface of the sheet assembly are not stacked on each other, and joining failure related to the thin sheet occurs. In particular, in a sheet assembly in which the sheet thickness ratio exceeds 6.0, there is a strong tendency that joining failure of the thin sheet on the sheet assembly surface occurs.

Joining failure in spot welding tends to be particularly problematic, for example, in the manufacture of vehicle components. The component for a vehicle includes, for example, thin soft steel as an exterior and a high strength steel sheet as a framework component. In spot welding of such components, a thin sheet serving as an exterior is inevitably disposed on the outermost surface of the sheet assembly.

Further, in the spot welding between the high strength steel sheet and the soft steel, the nugget tends to be formed biased toward the high strength steel sheet. This is because the high strength steel sheet contains more alloying elements than the soft steel, and the alloying elements increase the electric resistance of the high strength steel sheet. In spot welding between a high strength steel sheet and soft steel, resistance heat generation is preferentially generated in a high strength steel sheet having high electric resistance. Therefore, in the spot welding between the high strength steel sheet and the soft steel, the nugget does not grow to the soft steel, and there is a possibility that a joining failure of the soft steel occurs.

As described above, in resistance spot welding of a sheet assembly in which thin soft steel is disposed on the outermost surface, joining failure is likely to occur. In general, it is considered that joining failure is particularly likely to occur in a sheet assembly having a sheet thickness ratio exceeding 6.0. The joining failure is likely to occur in spot welding in which the number of stacked steel sheets is three or more. In particular, when the number of stacked steel sheets is four or more, joining failure is likely to occur.

In order to avoid the joining failure, suppressing the sheet thickness ratio to be small deteriorates the degree of freedom in designing the mechanical structural part. In addition, in order to avoid joining failure, it is possible to provide a notch in the steel sheet at the joint portion to reduce the number of steel sheets at the joint portion. However, according to this method, the strength of the member decreases. Therefore, in spot welding of a sheet assembly having a high sheet thickness ratio and three or more metal sheets, a technique for suppressing joining failure is desired.

Patent Document 1 discloses a resistance spot welding method in which a sheet assembly in which steel sheets with thin sheet thickness are stacked on at least one of two or more stacked steel sheets with thick sheet thickness is sandwiched between a pair of electrodes, and resistance spot welding is performed while applying a pressurizing force, the resistance spot welding method includes providing a preliminary step and the present step, pressurizing the sheet assembly with a high electrode pressurizing force to make the sheet assembly free of a sheet gap in the preliminary step, and then welding is performed at a low pressure, a short time, and a high current in an initial stage of welding, and welding is performed at a high pressure in a later stage of welding.

Patent Document 2 discloses a resistance spot welding method in which, in performing resistance spot welding by sandwiching a sheet assembly in which a thin sheet is stacked on at least one of two or more stacked thick sheets by a pair of electrodes and applying a pressurizing force, preliminary energization with a low current is started after the pressurizing force reaches a set value P, main energizing is started after the positions of the electrodes are fixed when all the stacked sheets are in contact with each other, thermal expansion of the sheet assembly after the start of the main energizing is suppressed by fixing the electrode positions to increase the pressurizing force, and the pressurizing force P and the absolute maximum value Pm of the pressurizing force satisfy Pm ≥ 1.5 × P and P ≤ 4 kN.

Patent Document 3 discloses a resistance spot welding method for a high-strength thin steel sheet, in which, in performing resistance spot welding by sandwiching two or more stacked high-strength thin steel sheets by a pair of electrodes and applying a pressurizing force, the first point is welded, the position of the electrode is moved, the first weld is cooled to a temperature equal to or lower than the Mf point, and then the second point is welded so as to partially stack the first weld.

Patent Document 4 discloses a spot welding method for performing spot welding on a stacked body formed by stacking three or more workpieces, the method including: pinching the stacked body between a first welding chip and a second welding chip, and electrically connecting an inner workpiece facing an inner side of the stacked body among two workpieces having a maximum contact resistance in the stacked body to an earth electrode or an electrode having the same polarity as that of the second welding chip adjacent to the inner workpiece and adjacent to an outer workpiece facing an outer side of the stacked body; and causing a current from the first electrode chip toward the second welding chip to flow, thereby generating a current from the first electrode chip toward the electrode via the inner workpiece, and pressing the stacked body with a first pressurizing force by the first welding chip and the second welding chip, joining the inner workpiece to another workpiece, and joining the inner workpiece and the outer workpiece by pressing the stacked body with a second pressing force larger than the first pressing force.

### Citation List

### Patent Documents

Patent Document 1: Japanese Unexamined Patent Application, First Publication No. 2009-241112
Patent Document 2: Japanese Unexamined Patent Application, First Publication No. 2008-290098
Patent Document 3: Japanese Unexamined Patent Application, First Publication No. 2010-172945
Patent Document 4: Japanese Unexamined Patent Application, First Publication No. 2012-71333

### SUMMARY OF INVENTION

### Technical Problem

In the technique of Patent Documents 1 to 4, it is necessary to increase the welding current value in order to promote the growth of the nugget and avoid the joining failure. However, when the welding current value is increased, splash is likely to occur. Splash refers to a phenomenon in which a base metal is locally overheated and melted and scattered or a metal thereof in lap resistance welding such as spot welding. A large amount of splash deteriorates welding workability. In addition, when the splash occurs, a deep dent is generated in the weld, and the joint strength may be reduced. According to the technique of Patent Documents 1 to 4, it is difficult to avoid both joining failure and splash.

In view of the above circumstances, an object of the present invention is to provide a spot-welded member and a method for manufacturing the spot-welded member capable of avoiding both joining failure and occurrence of splash in spot welding of a sheet assembly having three or more metal sheets, and having high strength reliability. Solution to Problem

The gist of the present invention is as follows.
(1) A spot-welded member according to one aspect of the present disclosure includes: one first metal sheet and one second metal sheet disposed on surfaces of the spot-welded member; a first internal metal sheet group including one or more internal metal sheets disposed between the first metal sheet and the second metal sheet; a first spot weld having a first nugget joining the first metal sheet and the first internal metal sheet group; and a second spot weld having a second nugget joining the second metal sheet and the first internal metal sheet group; in which an indentation of the first spot weld is provided on the first metal sheet and the internal metal sheet, and an indentation of the second spot weld is provided on the first metal sheet and the second metal sheet, and the indentation of the first spot weld is spaced apart from the indentation of the second spot weld, and the first nugget is spaced apart from the second metal sheet, and the second nugget is spaced apart from the first metal sheet.
(2) Preferably, in the spot-welded member according to (1), the number of the internal metal sheets constituting the first internal metal sheet group to be joined by the first nugget is two or more.
(3) Preferably, the spot-welded member according to (1) or (2) has a metal sheet group including one or more internal metal sheets disposed between the first internal metal sheet group and the second metal sheet, the first nugget is spaced apart from the second internal metal sheet group, and the second nugget joins the second metal sheet, the first internal metal sheet group, and the second internal metal sheet group.
(4) Preferably, in the spot-welded member according to any one of (1) to (3), an interval between a center of the indentation of the first spot weld and a center of the indentation of the second spot weld is 10 mm or more and 50 mm or less in plan view.
(5) Preferably, in the spot-welded member according to any one of (1) to (4), the second metal sheet is thicker than the first metal sheet.
(6) Preferably, in the spot-welded member according to (5), a value obtained by dividing the total thickness of the first metal sheet and the first internal metal sheet group to be joined by the first nugget by a thickness of the first metal sheet is less than 6.0, and a value obtained by dividing the total thickness of the first metal sheet, the second metal sheet, and the internal metal sheet included in the spot-welded member by the thickness of the first metal sheet exceeds 6.5.
(7) Preferably, in the spot-welded member according to any one of (1) to (6), the first metal sheet, the second metal sheet, and the internal metal sheet are steel sheets, and a Vickers hardness of the first metal sheet is 150 HV or less, and the hardness of one or more of the second metal sheet and the internal metal sheet is 300 HV or more.
(8) Preferably, in the spot-welded member according to any one of (1) to (7), an adhesive is provided at one or more faying surfaces.
(9) Preferably, in the spot-welded member according to any one of (1) to (8), the number of the metal sheets to be joined by the second nugget is three or more, and a value obtained by dividing the total thickness of the metal sheets to be joined by the second nugget by a thickness of the second metal sheet is 1.8 to 4.2.
(10) A method for manufacturing a spot-welded member according to another aspect of the present disclosure includes: performing first spot welding on one first metal sheet and a first internal metal sheet group including one or more internal metal sheets stacked on each other to form a joined body having a first nugget which joins the first metal sheet and the first internal metal sheet group; and stacking one second metal sheet on the internal metal sheet disposed on the surface of the joined body and further performing second spot welding to form a second nugget which joins the first internal metal sheet group and the second metal sheet of the joined body, a welding point of the second spot welding is spaced apart from a welding point of the first spot welding, and the second spot welding is terminated before the second nugget grows to the first metal sheet.
(11) Preferably, in the method for manufacturing a spot-welded member according to (10), the number of the internal metal sheets constituting the first internal metal sheet group to be subjected to the first spot welding is set to two or more.
(12) Preferably, in the method for manufacturing a spot-welded member according to (10) or (11), the second spot welding is performed by sequentially stacking a second internal metal sheet group, which includes one or more internal metal sheets, and the second metal sheet on the internal metal sheet disposed on the surface of the joined body.
(13) Preferably, in the method for manufacturing a spot-welded member according to any one of (10) to (12), an interval between a center of the welding point in the first spot welding and a center of the welding point in the second spot welding is set to 10 mm or more and 50 mm or less in plan view.
(14) Preferably, in the method for manufacturing a spot-welded member according to any one of (10) to (13), the second metal sheet is thicker than the first metal sheet.
(15) Preferably, in the method for manufacturing a spot-welded member according to (14), a value obtained by dividing the total thickness of the first metal sheet and the first internal metal sheet group included in the joined body by a thickness of the first metal sheet is set to less than 6.0, a value obtained by dividing the total thickness of the first metal sheet, the second metal sheet, and the internal metal sheet included in the spot-welded member by the thickness of the first metal sheet is set to more than 6.5.
(16) Preferably, in the method for manufacturing a spot-welded member according to any one of (10) to (15), the first metal sheet, the second metal sheet, and the internal metal sheet are steel sheets, the Vickers hardness of the first metal sheet is set to 150 HV or less, and the hardness of one or more of the second metal sheet and the internal metal sheet is set to 300 HV or more.
(17) Preferably, the method for manufacturing a spot-welded member according to any one of (10) to (16) further includes applying an adhesive to one or more of a surface of the first metal sheet and a surface of the internal metal sheet before the first spot welding, and the surface to which the adhesive is applied is set as a faying surface of the joined body.
(18) Preferably, the method for manufacturing a spot-welded member according to any one of (10) to (17) further includes applying an adhesive to one or more of the surface of the joined body and a surface of a metal sheet stacked on the surface of the joined body before the second spot welding, and the surface to which the adhesive is applied is set as a faying surface of the spot-welded member.
(19) Preferably, in the method for manufacturing a spot-welded member according to any one of (10) to (18), the number of the metal sheets to be joined by the second nugget is set to three or more, and a value obtained by dividing the total thickness of the metal sheets to be joined by the second nugget by a thickness of the second metal sheet is set to 1.8 to 4.2.

### Advantageous Effects of Invention

According to the present invention, it is possible to provide a spot-welded member and a method for manufacturing the spot-welded member capable of avoiding both joining failure and occurrence of splash in spot welding of a sheet assembly having three or more metal sheets, and having high strength reliability.

### BRIEF DESCRIPTION OF DRAWINGS

[FIG. 1] A schematic cross-sectional view of first spot welding to two metal sheets and a joined body.
[FIG. 2] A schematic cross-sectional view of a second spot welding to the joined body in FIG. 1 and one metal sheet, and a spot-welded member.
[FIG. 3] A schematic cross-sectional view of first spot welding to three metal sheets and a joined body.
[FIG. 4] A schematic cross-sectional view of a second spot welding to the joined body in FIG. 3 and one metal sheet, and a spot-welded member.
[FIG. 5A] A schematic cross-sectional view of second spot welding to the joined body in FIG. 1 and two metal sheets, and a spot-welded member.
[FIG. 5B] A schematic cross-sectional view of a second spot welding to the joined body in FIG. 1 and three metal sheets, and a spot-welded member.
[FIG. 6] A cross-sectional view of a spot-welded member in which surface splash occurred.
[FIG. 7A] A cross-sectional photograph of a spot-welded member of Example 3.
[FIG. 7B] A cross-sectional photograph of a spot-welded member of Example 4.
[FIG. 8] A cross-sectional photograph of an Example of a spot-welded member having five metal sheets.

### DESCRIPTION OF EMBODIMENTS

### (1. Method for manufacturing spot-welded member 1)

A method for manufacturing a spot-welded member 1 according to an aspect of the present invention includes: performing first spot welding S1 on one first metal sheet 111 and a first internal metal sheet group 1131 including one or more internal metal sheets 113 stacked on each other to form a jointed body 13 including a first nugget 121 that joins the first metal sheet 111 and the first internal metal sheet group 1131; and forming a second nugget 122 for joining the first internal metal sheet group 1131 and the second metal sheet 112 of a joined body 13 by stacking one second metal sheet 112 on the internal metal sheet 113 disposed on the surface of the joined body 13 and further performing second spot welding S2, and the welding point WP of the second spot welding S2 is spaced apart from the welding point WP of the first spot welding S1, and the second spot welding S2 is terminated before the second nugget 122 grows up to the first metal sheet 111.

### (First spot welding S1)

First, a sheet assembly in which one first metal sheet 111 is further stacked on a first internal metal sheet group 1131 formed by stacking one or more internal metal sheets 113 is prepared. The sheet assembly is subjected to first spot welding S1. In the spot welding, the stacked metal sheet is sandwiched between the tips of the pair of spot welding electrodes E, and a current is applied while applying a pressurizing force. Indirect spot welding, which is resistance welding in which the metal sheet is not sandwiched between the tips of the pair of electrodes E, is not regarded as spot welding in the method for manufacturing the spot-welded member 1 according to the present embodiment.

The metal sheet is melted by Joule heat generated by the current. The melted portion grows from the vicinity of the center of the sheet assembly toward the surface of the sheet assembly. The sheet assembly refers to a plurality of metal sheets stacked to be spot welded. When the energization is terminated, heat transfer from the metal sheet to the electrode E occurs, and the molten metal solidifies. The nuggets formed by solidification of the molten metal join the metal sheets.

The first metal sheet 111 is a part of the plurality of metal sheets included in the spot-welded member 1. The internal metal sheet 113 constituting the first internal metal sheet group 1131 is also a part of the plurality of metal sheets included in the spot-welded member 1. The first metal sheet 111 is disposed on the surface of the spot-welded member 1. The internal metal sheet 113 is disposed inside the spot-welded member 1. However, when the first spot welding S1 is completed, the internal metal sheet 113 is disposed on the surface of the joined body 13.

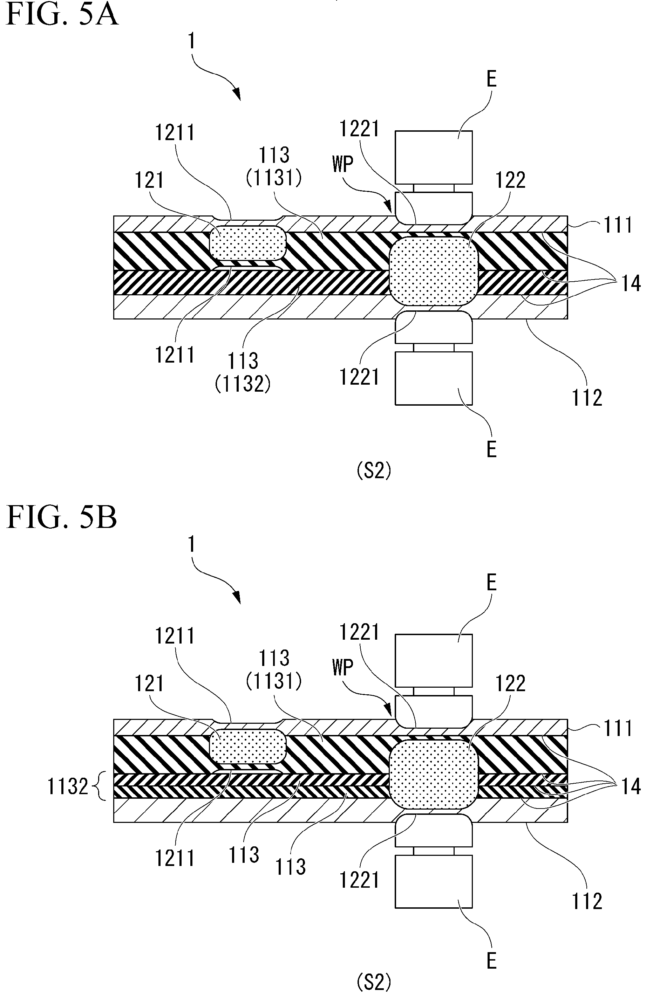

The spot-welded member 1 may include a second internal metal sheet group 1132 including one or more internal metal sheets 113 (see FIG. 5A and FIG. 5B). The first internal metal sheet group 1131 and the second internal metal sheet group 1132 are distinguished in terms of whether or not they are targets of the first spot welding S1. The first internal metal sheet group 1131 is subjected to the first spot welding S1. Therefore, the first nugget 121 is formed in the first internal metal sheet group 1131. On the other hand, the second internal metal sheet group 1132 is not subjected to the first spot welding S1. Therefore, the first nugget 121 is not formed in the second internal metal sheet group 1132. That is, the second internal metal sheet group 1132 is spaced apart from the first nugget 121. Details of the second internal metal sheet group 1132 will be described later.

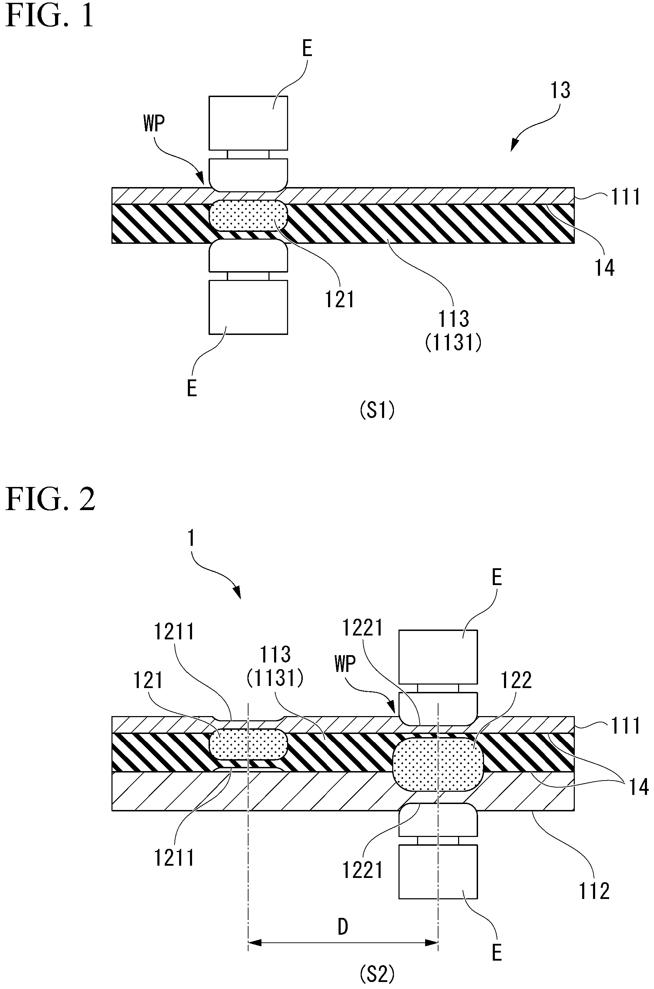

The joined body 13 as illustrated in FIG. 1 and the like is formed by the first spot welding S1. The joined body 13 includes a first metal sheet 111 and an internal metal sheet 113 that are stacked, and a first nugget 121. The first metal sheet 111 is disposed on one surface of the joined body 13. The internal metal sheet 113 is disposed on the surface of the joined body 13 at the end of the first spot welding S1. The first nugget 121 joins the first metal sheet 111 and the first internal metal sheet group 1131.

On the surface of the joined body 13, the first indentation 1211 is provided by the first spot welding S1. That is, the first indentation 1211 is provided for the first metal sheet 111 and the internal metal sheet 113 disposed on the surface of the joined body 13. The indentation is a depression on the surface of the base metal caused by the electrode chip as a result of welding in spot welding.

### (Second spot welding S2)

Next, one second metal sheet 112 is stacked on the internal metal sheet 113 disposed on the surface of the joined body 13 (see FIG. 2 and the like). The second spot welding S2 is performed on the joined body 13 and second metal sheet 112 which are stacked. The second nugget 122 is formed by the second spot welding S2 to obtain the spot-welded member 1 as illustrated in FIG. 2 and the like.

The second metal sheet 112 is a part of the plurality of metal sheets included in the spot-welded member 1. The second metal sheet 112 is disposed on the surface of the spot-welded member 1 on the opposite side of the first metal sheet 111.

The spot-welded member 1 includes a first metal sheet 111, a second metal sheet 112, an internal metal sheet 113, a first nugget 121, and a second nugget 122. Since the first spot welding S1 is not applied to the second metal sheet 112, the second metal sheet 112 is spaced apart from the first nugget 121.

On both surfaces of the spot-welded member 1, second indentations 1221 are provided by the second spot welding S2. That is, the second indentations 1221 are provided for the first metal sheet 111 and the second metal sheet 112.

The second nugget 122 joins the first internal metal sheet group 1131 of the joined body 13 and the second metal sheet 112. However, the second spot welding S2 is terminated before the second nugget 122 grows to the first metal sheet 111. Therefore, the second nugget 122 does not join all the metal sheets of the spot-welded member 1. The second nugget 122 is spaced apart from the first metal sheet 111.

In the second spot welding S2, the welding point WP of the second spot welding S2 is spaced apart from the welding point WP of the first spot welding S1. The welding point WP is a portion of the metal sheet with which the electrode E for spot welding is brought into contact. By spacing the welding point WP of the first spot welding S1 and the welding point WP of the second spot welding S2 apart, the second nugget 122 is spaced apart from the first nugget 121. By observing the cross section of the spot-welded member 1, it can be determined whether or not the first nugget 121 is spaced apart from the second nugget 122.

### (Operation and Effects)

In the first spot welding S1, only a part of the metal sheets included in the spot-welded member 1 is to be welded. Accordingly, in the first spot welding S1, the sheet thickness ratio of the sheet assembly is reduced. The sheet thickness ratio of the sheet assembly is a value obtained by dividing the total thickness of the metal sheets of the sheet assembly by the thinner thickness of the metal sheets located on the surfaces of the sheet assembly. By producing the sheet assembly from only some metal sheets, the total thickness of the sheet assembly can be reduced, and the sheet thickness ratio can be reduced.

By reducing the sheet thickness ratio in the first spot welding S1, the welding current value required for growing the first nugget 121 to the first metal sheet 111 is reduced. By reducing the sheet thickness ratio, joining failure of the first metal sheet 111 can be avoided. Furthermore, by reducing the sheet thickness ratio, it is also possible to reduce the welding current value to avoid splash in the first spot welding S1.

In the second spot welding S2, apparently, all the metal sheets included in the spot-welded member 1 are to be welded. However, in the second spot welding S2, the second nugget 122 is not allowed to grow to the first metal sheet 111. Since the first metal sheet 111 is joined to the first internal metal sheet group 1131 in the first spot welding S1, it is not necessary to grow the second nugget 122 up to the first metal sheet 111 in the second spot welding S2. Therefore, in the second spot welding S2, it is possible to select a welding current value lower than that of ordinal spot welding of a sheet assembly having high sheet thickness ratio.

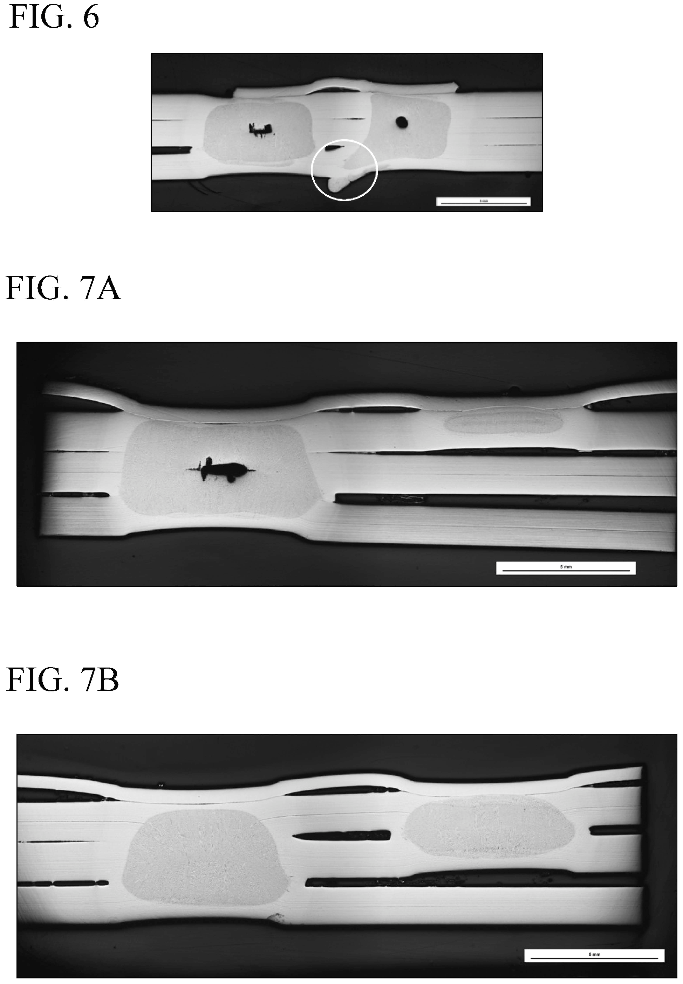

When the welding current value is increased in order to grow the nugget to the first metal sheet 111, there is an increased possibility that surface splash occurs on the surface of the second metal sheet 112. The surface splash is a phenomenon in which the molten metal of the nugget blows out from the surface of the metal sheet (see FIG. 6). The surface splash protrudes from the surface of the weld or adheres to the surface of the metal sheet, thereby impairing the aesthetic appearance of the spot-welded member 1. Further, the surface splash deteriorates welding workability. However, in the method for manufacturing the spot-welded member 1 according to the present embodiment, the splash in the second spot welding S2 can be extremely efficiently suppressed.

Further, in the second spot welding S2, the welding point WP of the second spot welding S2 is spaced apart from the welding point WP of the first spot welding S1. Thus, the shunt current in the second spot welding S2 can be suppressed. The shunt current is a current through a parallel circuit formed by a pre-existing welding point in spot welding. In the second spot welding S2, the first nugget 121 is a pre-existing welding point that causes a shunt current. When the shunt current to the pre-existing welding point occurs, since the current through the second metal plate is increased due to the influence of the shunt current, the possibility of occurrence of surface splash on the surface of the second metal sheet 112 is further increased.

In the method for manufacturing the spot-welded member 1 according to the present embodiment, the welding point WP of the second spot welding S2 is spaced apart from the welding point WP of the first spot welding S1, and the shunt current is suppressed. The occurrence of splash in the second spot welding S2 is more reliably suppressed by suppressing the shunt current.

The most basic aspect of the method for manufacturing the spot-welded member 1 according to the present embodiment has been described above. Hereinafter, a more preferred aspect will be described.

### (Spot welding of four or more metal sheets)

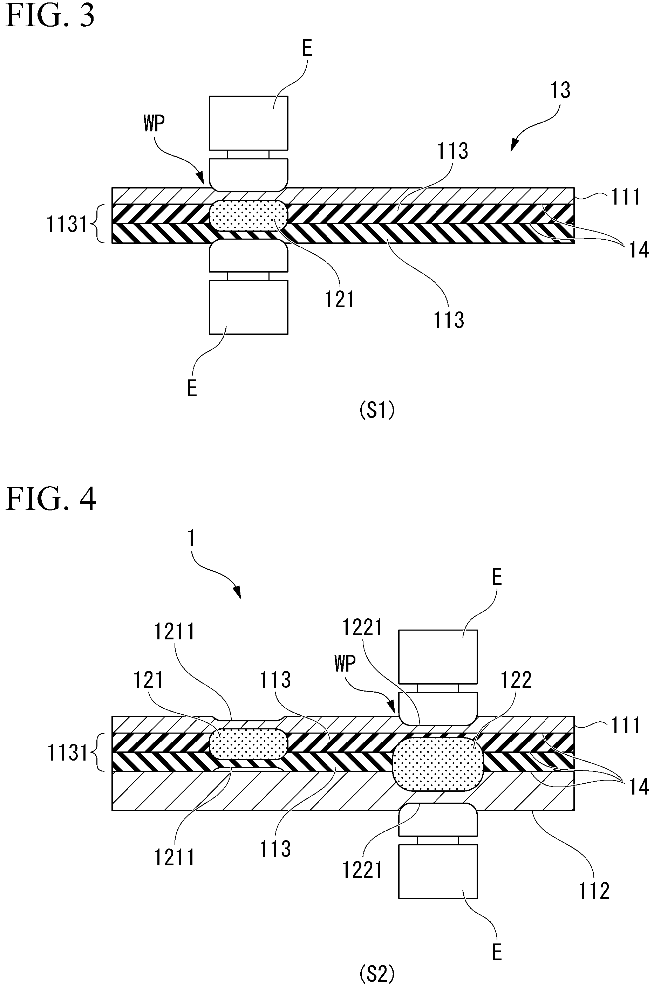

As illustrated in FIG. 1, the number of internal metal sheets 113 constituting the first internal metal sheet group 1131 to be subjected to the first spot welding S1 may be 1. On the other hand, as illustrated in FIG. 3 and FIG. 4, the number of the internal metal sheets 113 constituting the first internal metal sheet group 1131 to be subjected to the first spot welding S1 may be two or more. In this case, one internal metal sheet 113 is disposed on the surface of the joined body 13, and the remaining internal metal sheet 113 is disposed inside the joined body 13.

As illustrated in FIG. 2, the second spot welding S2 may be performed after only the second metal sheet 112 is stacked on the internal metal sheet 113 disposed on the surface of the joined body 13. In this case, the second metal sheet 112 directly is stacked on the internal metal sheet 113 disposed on the surface of the joined body 13. On the other hand, as illustrated in FIG. 5A and FIG. 5B, the second spot welding S2 may be performed after the second internal metal sheet group 1132 including one or more internal metal sheets 113 and the second metal sheet 112 are sequentially stacked on the internal metal sheet 113 disposed on the surface of the joined body 13. That is, the second internal metal sheet group 1132 including another internal metal sheet 113 may be further stacked between the second metal sheet 112 and the first internal metal sheet group 1131 of the joined body 13. In FIG. 5A, the number of the internal metal sheets 113 included in the second internal metal sheet group 1132 is one. On the other hand, in FIG. 5B, the number of the internal metal sheets 113 included in the second internal metal sheet group 1132 is two. The number of the internal metal sheets 113 included in the second internal metal sheet group 1132 may be three or more.

In the case as shown in FIG. 5A and FIG. 5B, the second metal sheet 112 is stacked on the first internal metal sheet group 1131 included in the joined body 13 via the additionally provided second internal metal sheet group 1132. Then, the second spot welding S2 is applied to the joined body 13, the second internal metal sheet group 1132, and the second metal sheet 112.

According to the aspects illustrated in FIG. 3, FIG. 4, FIG. 5A, and FIG. 5B, the number of metal sheets included in the spot-welded member 1 can be four or more. This makes it possible to manufacture the complicated spot-welded member 1 having a large number of metal sheets.

In the aspect illustrated in FIG. 5A and FIG. 5B, the number of metal sheets included in the joined body 13 is 2. On the other hand, as illustrated in FIG. 3, the number of metal sheets included in the joined body 13 may be three or more, and as illustrated in FIG. 5A and FIG. 5B, two or more metal sheets may be spot welded to the joined body 13.

### (Interval between centers of welding points WP)

The interval between welding point WP in first spot welding S1 and welding point WP in second spot welding S2 is not particularly limited. From the viewpoint of further reducing the shunt current and further reliably suppressing the splash, it is preferable that the interval D between the center of the welding point WP in the first spot welding S1 and the center of the welding point WP in the second spot welding S2 is set to 10 mm or more, 15 mm or more, 20 mm or more, or 30 mm or more in plan view. On the other hand, from the viewpoint of further improving the load transfer efficiency of the spot-welded member 1, it is preferable that the interval D between the center of the welding point WP in the first spot welding S1 and the center of the welding point WP in the second spot welding S2 is set to 50 mm or less, 45 mm or less, 40 mm or less, or 35 mm or less in plan view.

The center of the welding point WP is a position where the center axis of the electrode E is disposed at the time of spot welding. The center of the first indentation 1211 formed on the surface of the joined body 13 is regarded as the center of the welding point WP in the first spot welding S1. The center of the second indentation 1221 formed on the surface of the spot-welded member 1 is regarded as the center of the welding point WP in the second spot welding S2.

When the spot-welded member 1 is manufactured, the first spot welding S1 and the second spot welding S2 may be performed twice or more. For example, when the metal sheet is a flange section of a hat-shaped member, the first spot welding S1 and the second spot welding S2 are performed on the flange section a plurality of times along the extending direction of the flange section. In this case, the interval D between the center of the welding point WP in the first spot welding S1 and the center of the welding point WP in the second spot welding S2 means the interval D between the center of the welding point WP in the first spot welding S1 and the center of the welding point WP in the second spot welding S2 closest thereto.

### (Sheet thickness of second metal sheet 112)

The thickness of the second metal sheet 112 is not particularly limited. From the viewpoint of reliably joining the second metal sheet 112 to at least the internal metal sheet 113 adjacent thereto, the second metal sheet 112 is preferably thicker than the first metal sheet 111. This further facilitates growing the second nugget 122 to the second metal sheet 112. The thickness of the second metal sheet 112 may be 1.1 times or more, 1.2 times or more, 1.5 times or more, or 2.0 times or more the thickness of the first metal sheet 111.

### (Sheet thickness ratio)

The sheet thickness ratio of the joined body 13, that is, the value obtained by dividing the total thickness of the first metal sheet 111 and the first internal metal sheet group 1131 included in the joined body 13 by the thickness of the first metal sheet 111 is preferably less than 6.0. This makes it easier to grow the first nugget 121 to the first metal sheet 111. The sheet thickness ratio of the joined body 13 may be 5.8 or less, 5.5 or less, or 5.0 or less.

The sheet thickness ratio of the spot-welded member 1 based on the thickness of the first metal sheet 111, that is, a value obtained by dividing the total thickness of the first metal sheet 111, the second metal sheet 112, and the internal metal sheet 113 of the spot-welded member 1 by the thickness of the first metal sheet 111 is preferably set to more than 6.5. As a result, the strength and rigidity of the spot-welded member 1 are further improved. The sheet thickness ratio of the spot-welded member 1 based on the thickness of the first metal sheet 111 may be 6.8 or more, 7.0 or more, 7.2 or more, or 7.5 or more.

When the number of metal sheets to be joined by the second nugget 122 is three or more, the sheet thickness ratio related to the second nugget 122 is preferably set to 1.8 to 4.2. The number of metal sheets to be joined by the second nugget 122 is the total number of the second metal sheets 112 and the internal metal sheets 113 to be joined by the second nugget 122. When determining the number of metal sheets to be joined by the second nugget 122, it is not considered which one of the first internal metal sheet group 1131 and the second internal metal sheet group 1132 the internal metal sheets 113 belong to. The sheet thickness ratio related to the second nugget 122 is a value obtained by dividing the total thickness of the metal sheets to be joined by the second nugget 122 by the thickness of the second metal sheet 112.

In order to set the number of the metal sheets joined by the second nugget 122 to three or more, as illustrated in FIG. 4, the number of the internal metal sheets 113 constituting the first internal metal sheet group 1131 may be set to two or more. In the spot-welded member 1 illustrated in FIG. 4, the number of the internal metal sheets 113 constituting the first internal metal sheet group 1131 is 2, and the number of the internal metal sheets 113 constituting the second internal metal sheet group 1132 is 0. The second nugget 122 in FIG. 4 joins the two internal metal sheets 113 of the first internal metal sheet group 1131 and the second metal sheet 112. Therefore, the number of metal sheets joined by the second nugget 122 in FIG. 4 is 3.

On the other hand, in order to set the number of metal sheets to be joined by the second nugget 122 to three or more, as illustrated in FIG. 5A, the number of the internal metal sheets 113 constituting the second internal metal sheet group 1132 may be set to 1 or more. In the spot-welded member 1 illustrated in FIG. 5A, the number of the internal metal sheets 113 constituting the first internal metal sheet group 1131 is 1, and the number of the internal metal sheets 113 constituting the second internal metal sheet group 1132 is 1. In the second nugget 122 of FIG. 5A, one internal metal sheet 113 of the first internal metal sheet group 1131, one internal metal sheet 113 of the second internal metal sheet group 1132, and the second metal sheet 112 are joined. Therefore, the number of metal sheets to be joined by the second nugget 122 in FIG. 5A is also 3.

In any case, the sheet thickness ratio related to the second nugget 122 is preferably set to 1.8 to 4.2. By setting the sheet thickness ratio related to the second nugget 122 to 1.8 or more, the occurrence of surface splash from the second metal sheet 112 can be further suppressed. By setting the sheet thickness ratio related to the second nugget 122 to 4.2 or less, it is possible to further strengthen the joining between the second nugget 122 and the internal metal sheet adjacent thereto. When the sheet thickness on the second metal sheet side increases, the cross-sectional area through which the current flows increases, and the electric resistance decreases. Therefore, the shunt current to the first nugget side increases. Therefore, when the current value is constant, the formation of the second nugget becomes insufficient. Normally, since the current is increased so as to compensate for this, the surface splash is likely to occur.

The sheet thickness ratio related to the second nugget 122 may be 2.0 or more, 2.5 or more, or 3.0 or more. The sheet thickness ratio related to the second nugget 122 may be 4.0 or less, 3.5 or less, or 3.2 or less.

### (Type of metal sheet)

The type of the metal sheet is not particularly limited. In the method for manufacturing the spot-welded member 1 according to the present embodiment, any material that can be spot welded can be used as the welding base metal. A suitable material according to the application of the spot-welded member 1 can be adopted. Examples of the metal sheet include a steel sheet, an aluminum sheet, and a stainless sheet.

A preferred example of the metal sheet is the steel sheet. In particular, one or more metal sheets are preferably high strength steel sheets. For example, when the spot-welded member 1 is a vehicle component, the thickness of the metal sheet can be reduced while ensuring the strength of the spot-welded member 1 by using one or more metal sheets as high strength steel sheets. By reducing the thickness of the metal sheet, the weight of the spot-welded member 1 can be reduced.

When the metal sheet is a steel sheet, it is preferable that the first metal sheet 111 is soft steel, and one or more of the second metal sheet 112 and the internal metal sheet 113 are high strength steel sheets. For example, it is preferable that the Vickers hardness of the first metal sheet 111 is set to 150 HV or less, 140 HV or less, 130 HV or less, or 120 HV or less, and the hardness of one or more of the second metal sheet 112 and the internal metal sheet 113 is set to 300 HV or more, 320 HV or more, 380 HV or more, or 440 HV or more. Since the first metal sheet 111 is disposed on the outermost surface of the spot-welded member 1, it is suitable for an exterior member of an automobile, for example. When the first metal sheet 111 is made of thin soft steel, formability of the first metal sheet 111 can be improved, and aesthetic appearance of an automobile can be improved. In addition, from the viewpoint of improving the corrosion resistance of the automobile, a zinc-plated steel sheet (electro zinc-plated steel sheet, hot-dip galvanized steel sheet, galvannealed steel sheet, zinc nickel plated steel sheet) is desirable. The second metal sheet 112 and the internal metal sheet 113 are suitable for, for example, a frame component of an automobile. By using one or more of the second metal sheet 112 and the internal metal sheet 113 as a high strength steel sheet, collision safety of an automobile can be enhanced. Examples of the high strength steel sheet include a press-molded cold-rolled steel sheet, a hot-rolled steel sheet, and a hot stamped steel sheet. In the case of an automobile vehicle body portion requiring corrosion resistance, a zinc-plated steel sheet (hot-dip galvanized steel sheet, galvannealed steel sheet, galvanized hot stamped steel sheet) or an aluminum-based plated hot stamped steel sheet may be included.

### (Application of adhesive)

A weld bonding may be applied to the method for manufacturing the spot-welded member 1 according to the present embodiment. The weld bonding is a method in which an adhesive is applied to the faying surface 14 in advance and spot welding is performed. Therefore, the method for manufacturing the spot-welded member 1 according to the present embodiment may include bonding a metal sheet using an adhesive in addition to the first spot welding S1 and the second spot welding S2. By using both the bonding and the spot welding, the rigidity and the joining strength of the spot-welded member 1 are further enhanced. The weld bonding may be applied to one or both of the first spot welding S1 and the second spot welding S2.

For example, the method for manufacturing the spot-welded member 1 may further include applying an adhesive to one or more of the surface of the first metal sheet 111 and the surface of the internal metal sheet 113 before the first spot welding S1. In this case, the surface to which the adhesive is applied is used as the faying surface 14 of the joined body 13. The faying surface 14 of the joined body 13 is a mating surface of metal sheets stacking each other in the joined body 13.

For example, the method for manufacturing the spot-welded member 1 may further include applying an adhesive to one or more of the surface of the joined body 13 and the surface of the metal sheet stacked thereon before the second spot welding S2. In this case, the surface to which the adhesive is applied is defined as a faying surface 14 of the spot-welded member 1. The faying surface 14 of the spot-welded member 1 is a mating surface of stacking metal sheets in the spot-welded member 1.

The spot-welded member 1 includes two or more faying surfaces 14. From the viewpoint of improving rigidity and joining strength, it is preferable to provide an adhesive at least on one faying surface 14. For example, it is preferable to provide an adhesive at the faying surface 14 between the first metal sheet 111 and the second metal sheet 112, and it is more preferable to provide an adhesive at all the faying surfaces 14. The type of the adhesive is not particularly limited. Examples of the adhesive include thermosetting epoxy-based adhesives, urethane-based adhesives, and rubber-based adhesives that are cured by heat treatment (140°C to 190°C) of electrodeposition coating of an automobile.

### (2. Spot-welded member 1)

A spot-welded member 1 according to another aspect of the present invention includes: one first metal sheet 111 and one second metal sheet 112 disposed on a surface of the spot-welded member 1; a first internal metal sheet group 1131 including one or more internal metal sheets 113 disposed between the first metal sheet 111 and the second metal sheet 112; a first spot weld having a first nugget 121 that joins the first metal sheet 111 and the first internal metal sheet group 1131; and a second spot weld having a second nugget 122 that joins the second metal sheet 112 and the first internal metal sheet group 1131, in which a first indentation 1211 that is an indentation of the first spot weld is provided on the first metal sheet 111 and the internal metal sheet 113, and, the second indentation 1221, which is the indentation of the second spot weld, is provided on the first metal sheet 111 and the second metal sheet 112, the indentation of the first spot weld is spaced apart from the indentation of the second spot weld, the first nugget 121 is spaced apart from the second metal sheet 112, and the second nugget 122 is spaced apart from the first metal sheet 111. Hereinafter, the spot-welded member 1 according to the present embodiment will be described in detail. The preferred aspect of the method for manufacturing the spot-welded member 1 described above is also applicable to the spot-welded member 1 according to the present embodiment.

As illustrated in FIG. 2 and the like, the spot-welded member 1 includes a first metal sheet 111, a second metal sheet 112, and an internal metal sheet 113. The first metal sheet 111 and the second metal sheet 112 are disposed on the surface of the spot-welded member 1. The internal metal sheet 113 is disposed between the first metal sheet 111 and the second metal sheet 112.

As illustrated in FIG. 2 and the like, the spot-welded member 1 further includes a first spot weld having the first nugget 121 and a second spot weld having the second nugget 122. The spot weld is a generic term for portions including a nugget and a heat-affected zone (HAZ). In addition, an indentation (that is, the depression on the surface of the base metal caused by the electrode chip) is formed in the spot weld.

The first nugget 121 joins the first metal sheet 111 and the first internal metal sheet group 1131. The second nugget 122 joins the second metal sheet 112 and the first internal metal sheet group 1131.

The first nugget 121 and the second nugget 122 are distinguished based on their corresponding indentations. One of the first indentations 1211, that is, indentations of the first spot weld is provided on the surface of the spot-welded member 1, and the other is provided inside the spot-welded member 1. Both the second indentations 1221, i.e., the indentations of the second spot weld, are provided on the surface of the spot-welded member 1. When the external appearance of the spot-welded member 1 is observed, it is possible to identify a portion where an indentation is provided on each of the two surfaces and a portion where an indentation is provided only on one surface. The nugget in which the indentation is provided only on one surface of the spot-welded member 1 is the first nugget 121. The nugget at the position where the indentation is provided on each of the two surfaces of the spot-welded member 1 is the second nugget 122.

The first metal sheet 111 and the second metal sheet 112 are distinguished based on nuggets provided thereon. The metal sheet provided with the first nugget 121 is the first metal sheet 111. The metal sheet provided with the second nugget 122 is the second metal sheet 112. In other words, the first indentation 1211 is provided on the first metal sheet 111 and the internal metal sheet 113 constituting the first internal metal sheet group 1131, and the second indentation 1221 is provided on the first metal sheet 111 and the second metal sheet 112. When the external appearance of the spot-welded member 1 is observed, it is found that the number of indentations is different between the first surface and the second surface of the spot-welded member 1. It can be determined that the metal sheet having more indentations is the first metal sheet 111.

The first indentation 1211 (i.e., the indentation of the first spot weld) is spaced apart from the second indentation 1221 (i.e., the indentation of the second spot weld). The outer edge of the first indentation 1211 and the outer edge of the second indentation 1221 can be easily identified by observing the surface of the first metal sheet 111. Therefore, whether or not the first indentation 1211 and the second indentation 1221 are spaced apart from each other can be easily determined based on the external appearance observation of the spot-welded member 1. In addition, it may be determined whether or not the first indentation 1211 and the second indentation 1221 are spaced apart by observing the cross section of the nugget. A method of cross section observation will be described later.

As shown in FIG. 2 and the like, the first nugget 121 is spaced apart from the second metal sheet 112. In addition, the second nugget 122 is spaced apart from the first metal sheet 111. That is, both the first nugget 121 and the second nugget 122 join only a part of the plurality of metal sheets included in the spot-welded member 1.

### (Operation and Effects)

The first nugget 121 is spaced apart from the second metal sheet 112. Similarly, the second nugget 122 is spaced apart from the first metal sheet 111. That is, the first nugget 121 and the second nugget 122 join only a part of the metal sheets included in the spot-welded member 1. Therefore, in the manufacture of the first nugget 121 and the second nugget 122, a high welding current value is not required, and splash is suppressed. The first nugget 121 and the second nugget 122 can be easily manufactured.

Further, in the manufacture of the first nugget 121 and the second nugget 122, a joining failure can be avoided. In general, it is difficult to grow the nugget to the thinnest metal sheet disposed on the surface of the sheet assembly at the time of joining the sheet assembly having a high sheet thickness ratio. Therefore, joining failure is likely to occur in the thinnest metal sheet disposed on the surface of the sheet assembly. However, in the manufacture of the first nugget 121, the second metal sheet 112 is not to be welded, and the sheet thickness ratio is reduced. In the manufacture of the second nugget 122, it is not necessary to grow the nugget up to the first metal sheet 111, so that the sheet thickness ratio is substantially reduced. Therefore, the first nugget 121 can reliably join the first metal sheet 111 and the metal sheet adjacent thereto. In addition, the second nugget 122 can reliably join the second metal sheet 112 and a metal sheet adjacent thereto.

In addition, since the first indentation 1211 and the second indentation 1221 are spaced apart from each other, the shunt current is suppressed in the second spot welding S2. Splash in the second spot welding S2 is more reliably suppressed by suppressing shunt current.

The most basic aspect of the spot-welded member 1 according to the present embodiment has been described above. Hereinafter, a more preferred aspect will be described.

### (Number of metal sheets to be joined by first nugget 121 and second nugget 122)

The first nugget 121 joins the first metal sheet 111 and the first internal metal sheet group 1131. In the spot-welded member 1 illustrated in FIG. 2, FIG. 5A, and FIG. 5B, the first nugget 121 joins the first metal sheet 111 and one internal metal sheet 113. Therefore, the number of the internal metal sheets 113 constituting the first internal metal sheet group 1131 is one, and the number of metal sheets joined by the first nugget 121 is 2. On the other hand, as illustrated in FIG. 4, the first nugget 121 may join the first metal sheet 111 and two or more internal metal sheets 113. That is, the number of the internal metal sheets 113 constituting the first internal metal sheet group 1131 may be two or more, and the number of the metal sheets may be three or more.

The second nugget 122 joins the second metal sheet 112 and the first internal metal sheet group 1131. In the spot-welded member 1 illustrated in FIG. 2, the second nugget 122 joins the second metal sheet 112 and one internal metal sheet 113. Therefore, the number of the internal metal sheets 113 constituting the first internal metal sheet group 1131 is one, and the number of metal sheets joined by the second nugget 122 is 2. On the other hand, as illustrated in FIG. 4, the second nugget 122 may join the second metal sheet 112 and two or more internal metal sheets 113. That is, the number of the internal metal sheets 113 constituting the first internal metal sheet group 1131 may be two or more, and the number of the metal sheets may be three or more.

As shown in FIG. 5A and FIG. 5B, the second internal metal sheet group 1132 including one or more internal metal sheets 113, which are not joined to the first nugget 121 but joined to the second nugget 122, may be disposed between the first internal metal sheet group 1131 and the second metal sheet 112. As illustrated in FIG. 5A, the number of internal metal sheets 113 included in the second internal metal sheet group 1132 may be one. On the other hand, as illustrated in FIG. 5B, similarly to the first internal metal sheet group 1131, the number of the internal metal sheets 113 constituting the second internal metal sheet group 1132 may also be two or more. In this case, the first indentation 1211 provided on the internal metal sheet 113 is provided on the internal metal sheet 113 of the first internal metal sheet group 1131 adjacent to the second internal metal sheet group 1132. Therefore, the first internal metal sheet group 1131 and the second internal metal sheet group 1132 can be distinguished from each other from the positions of the first nugget 121 and the second nugget 122 and the position of the first indentation 1211 provided in the internal metal sheet 113.

When the number of metal sheets to be joined by the first nugget 121 and/or the second nugget 122 is three or more, and the number of metal sheets included in the spot-welded member 1 is set to four or more, a complicated spot-welded member 1 having a large number of metal sheets can be manufactured.

### (Interval between centers of indentations)

In the spot-welded member 1 according to the present embodiment, the interval D between the center of the first indentation 1211 (that is, the indentation of the first spot weld) and the center of the second indentation 1221 (that is, the indentation of the second spot weld) is not particularly limited. From the viewpoint of further reducing the shunt current and more reliably suppressing the splash, the interval D between the center of the first indentation 1211 and the center of the second indentation 1221 is preferably set to 10 mm or more, 15 mm or more, 20 mm or more, or 30 mm or more in plan view. On the other hand, from the viewpoint of further improving the load transfer efficiency of the spot-welded member 1, the interval D between the center of the first indentation 1211 and the center of the second indentation 1221 is preferably set to 50 mm or less, 45 mm or less, 40 mm or less, or 35 mm or less in plan view.

### (Sheet thickness of second metal sheet 112)

The thickness of the second metal sheet 112 is not particularly limited. From the viewpoint of reliably joining the second metal sheet 112 to the internal metal sheet 113, the second metal sheet 112 is preferably thicker than the first metal sheet 111. The thickness of the second metal sheet 112 may be 1.1 times or more, 1.2 times or more, 1.5 times or more, or 2.0 times or more the thickness of the first metal sheet 111.

### (Sheet thickness ratio)

A value obtained by dividing the total thickness of the first metal sheet 111 and the first internal metal sheet group 1131 to be joined by the first nugget 121 by the thickness of the first metal sheet 111 is preferably set to less than 6.0, 5.8 or less, 5.5 or less, or 5.0 or less. This makes it easier to grow the first nugget 121 to the first metal sheet 111.

The sheet thickness ratio of the spot-welded member 1 based on the thickness of the first metal sheet 111, that is, a value obtained by dividing the total thickness of the first metal sheet 111, the second metal sheet 112, and the internal metal sheet 113 of the spot-welded member 1 by the thickness of the first metal sheet 111 is preferably set to more than 6.5. As a result, the strength and rigidity of the spot-welded member 1 are further improved. The sheet thickness ratio of the spot-welded member 1 based on the thickness of the first metal sheet 111 may be 6.8 or more, 7.0 or more, 7.2 or more, or 7.5 or more.

As illustrated in FIG. 4, FIG. 5A, and FIG. 5B, when the number of metal sheets to be joined by the second nugget 122 is three or more, a value obtained by dividing the total thickness of the metal sheets to be joined by the second nugget 122 by the thickness of the second metal sheet 112 is preferably set to 1.8 to 4.2. The value obtained by dividing the total thickness of the metal sheets joined by the second nugget 122 by the thickness of the second metal sheet 112 is referred to as the sheet thickness ratio related to the second nugget 122. By setting the sheet thickness ratio related to the second nugget 122 to 1.8 or more, the occurrence of surface splash from the second metal sheet 112 can be further suppressed. By setting the sheet thickness ratio related to the second nugget 122 to 4.2 or less, it is possible to further strengthen the joining between the second nugget 122 and the internal metal sheet adjacent thereto. The sheet thickness ratio related to the second nugget 122 may be 2.0 or more, 2.5 or more, or 3.0 or more. The sheet thickness ratio related to the second nugget 122 may be 4.0 or less, 3.5 or less, or 3.2 or less.

### (Type of metal sheet)

As described in relation to the method for manufacturing the spot-welded member 1, the type of the metal sheet is not particularly limited. A preferred example of the metal sheet is the steel sheet. When the first metal sheet 111, the second metal sheet 112, and the internal metal sheet 113 are steel sheets, the Vickers hardness of the first metal sheet 111 is preferably 150 HV or less, 140 HV or less, 130 HV or less, or 120 HV or less, and the hardness of one or more of the second metal sheet 112 and the internal metal sheet 113 is 300 HV or more, 320 HV or more, 350 HV or more, or 380HV. The upper limit of the hardness of the first metal sheet 111, the second metal sheet 112, and the internal metal sheet 113 is not particularly limited, but for example, the hardness of these metal sheets may be 730 HV or less or 700 HV or less.

### (Adhesive)

An adhesive may be provided at one or more faying surfaces 14 of the spot-welded member 1. The faying surface 14 of the spot-welded member 1 is a mating surface of stacking metal sheets in the spot-welded member 1. Accordingly, the rigidity and the joining strength of the spot-welded member 1 are further enhanced. From the viewpoint of improving rigidity and joining strength, it is preferable to provide an adhesive at least on one faying surface 14. For example, it is preferable to provide an adhesive at the faying surface 14 between the first metal sheet 111 and the second metal sheet 112, and it is more preferable to provide an adhesive at all the faying surfaces 14.

Although embodiments of the present invention have been described above, the present invention is not limited thereto, and can be appropriately modified without departing from the technical idea of the invention. Hereinafter, a more preferable example of the spot-welded member 1 according to the present embodiment and the method for manufacturing the spot-welded member 1 will be described. A preferred aspect described below is applicable to both the spot-welded member 1 and the method for manufacturing the spot-welded member 1.

### (Tensile strength of metal sheet)

Spot welding is widely used in the manufacture of vehicle components. Therefore, the method for manufacturing the spot-welded member 1 according to the present embodiment may be applied to a vehicle component. In this case, for example, the first metal sheet 111 is an exterior component of an automobile that is required to have high workability. The other metal sheet is a frame component of an automobile required to have high strength. Therefore, the tensile strength of the first metal sheet 111 may be 440 MPa or less, 420 MPa or less, or 400 MPa or less, and the tensile strength of one or more metal sheets other than the first metal sheet 111 may be 980 MPa or more, 1180 MPa or more, or 1470 MPa or more. As a result, it is possible to facilitate the processing of the exterior component of the automobile and to secure the strength of the frame component of the automobile.

### (Surface treatment of metal sheet)

One or more metal sheets may have a surface treatment layer. The surface treatment layer is, for example, a plating layer. The constitution of the plating layer can be suitable for the components of the metal sheet as substrate. For example, when the metal sheet is a steel sheet, the plating layer is preferably, for example, a zinc-plated layer, an aluminum-based plating layer, or the like. The zinc-plated layer is a plating layer having an average content of Zn of 30 mass% or more, or 50 mass% or more. Examples thereof include electro zinc-plating, hot-dip galvanizing, galvannealing, zinc nickel plating, hot stamped hot-dip galvanizing, zinc nickel plating, and alloying hot-dip galvanizing. The aluminum-based plating layer is a plating layer in which the average content of Al is 20 mass% or more, or 30 mass% or more. For example, hot stamped aluminum plating. A coating film may be provided on the surface of the spot-welded member 1. The coating film is, for example, an electrodeposition coating film provided on the surface of the spot-welded member 1 after spot welding.

### (Thickness of metal sheet)

The thickness of the metal sheet of the spot-welded member 1 is not particularly limited. For example, the thickness of the first metal sheet 111 is preferably 0.50 to 1.1 mm. The thickness of the second metal sheet 112 is preferably 0.9 to 2.6 mm. The thickness of the internal metal sheet 113 is preferably 0.9 to 2.6 mm.

### (Nugget diameter)

The sizes of the first nugget 121 and the second nugget 122 are not particularly limited. As long as the above-described requirements are satisfied, an appropriate nugget diameter according to the material, thickness, number, and the like of the metal sheet can be adopted. For example, when the sheet thickness of the first metal sheet 111 is 0.5 mm to 1.1 mm and the total sheet thickness of the metal sheets of the spot-welded member 1 is 3.5 mm to 9.0 mm, it is preferable that the diameter of the first nugget 121 is 3√ (t1) to 9√ (t1) and the diameter of the second nugget 122 is 3√ (t2) to 9√ (t2). Note that t1 is the sheet thickness of the first metal sheet 111, and t2 is the sheet thickness of the second metal sheet 112.

Here, the diameter of the first nugget 121 is the width of the nugget measured at an imaginary line along the faying surface 14 between the first metal sheet 111 and the internal metal sheet 113 adjacent thereto. The diameter of the second nugget 122 is the width of the nugget measured at an imaginary line along the faying surface 14 between the second metal sheet 112 and the adjacent internal metal sheet 113. The width of the melted and solidified portion is measured on a plan including the center of the first dent and the center of the second dent and perpendicular to the first metal sheet 111. The nugget diameter can be controlled by appropriately changing the energizing conditions according to the material, thickness, number, and the like of the metal sheet.

### (Pressure-contact portion)

In the weld provided with the second nugget 122, the first metal sheet 111 and the first internal metal sheet group 1131 are not joined by the second nugget 122. However, in the weld where the second nugget 122 is provided, a pressure-contact portion is preferably provided between the first metal sheet 111 and the first internal metal sheet group 1131. The pressure-contact portion is a portion where the base metal is not melted and solidified, but the base metal is solid-phase joined. When the first metal sheet 111 is brought into pressure-contact with the second spot welding S2, the joining strength of the spot-welded member 1 is further increased.

When the pressure-contact portion is provided between the first metal sheet 111 and the first internal metal sheet group 1131, the presence of the pressure-contact portion can be confirmed by a chisel test. In the chisel test, a chisel is driven into an interface between the first metal sheet 111 and the first internal metal sheet group 1131 at a spot welded portion to fracture the joint portion. When the plug fracture occurs on the first metal sheet 111 side, it is determined that the joint portion corresponds to any of the following situations.
(1) A first nugget 121 for joining the first metal sheet 111 and the first internal metal sheet group 1131 was formed at the joint portion subjected to the chisel test.
(2) In the joint portion subjected to the chisel test, the second nugget 122 and a pressure-contact portion for joining the first metal sheet 111 and the first internal metal sheet group 1131 were formed.

Then, the nugget formed at the fractured portion can be observed by cutting the fractured portion and etching the cross section. When the nugget is spaced apart from the first metal sheet 111, it is determined that the nugget is the second nugget 122, and a pressure-contact portion is provided between the first metal sheet 111 and the first internal metal sheet group 1131.

### (Welding conditions)

The conditions of the first spot welding S1 and the second spot welding S2 are not particularly defined. As long as the above-described requirements are satisfied, appropriate welding conditions according to the material, thickness, number, and the like of the metal sheet can be adopted. Preferable welding conditions are exemplified below.

In each of the first spot welding S1 and the second spot welding S2, the number of times of energization may be one or two or more times. When the number of times of energization is plural, the first and second current values may be the same or different. When the sheet thickness exceeds 5 mm, pulsation welding may be performed in which a current is applied many times at the same current value. In addition, upslope may be performed at the start of energization, or downslope may be performed at the end of energization. The upslope and downslope current waveforms may be continuous current waveforms or pulsed current waveforms. The upslope reduces the risk of splash and hydrogen embrittlement cracking during welding of ultra-high strength steel sheets when the gap between the metal sheets is large or when galvanized hot stamped steel sheets having high surface resistance are welded. The downslope reduces the risk of hydrogen embrittlement cracking during welding of ultra-high strength steel sheets and cracking of LME due to galvanization.

In addition, the current value may be changed during energization. For example, a high current may be set in the early stage of energization, and the current may be lowered in the late stage of energization. This promotes the formation of the nugget. In addition, the current may be set to a low current in the early stage of energization, and the current may be increased in the late stage of energization. This reduces the occurrence of splash particularly when the gap between the metal sheets is large.

The conditions of the number of times of energization, slope control, and the current value during welding may be freely combined according to the sheet assembly. The pressurizing force during welding may be changed as necessary.

The welding power supply may be a DC inverter, an AC inverter, or a single-phase AC. The shape of the electrode may be a DR type, an R type, a CR type, or a CF type. The material of the electrode may be chromium copper, chromium/zirconium copper, or alumina-dispersed copper. When cracks of LME occur in the indentation portion in welding of the zinc-plated steel sheet, the material of the electrode is desirably alumina-dispersed copper.

In a more preferable example of the welding conditions, a DR type electrode having an electrode tip of 5 mm to 8 mm is used, the pressurizing force is 250 kgf to 700 kgf (2.451 kN to 6.864 kN), the energizing time is 12 cycles to 60 cycles (240 msec to 1200 msec), the current value is 6 kA to 13 kA, and the retention time is 1 cycle to 60 cycles (20 msec to 1200 msec).

### (Application)

Applications of the spot-welded member 1 and the method for manufacturing the spot-welded member 1 according to the present embodiment are not particularly limited. For example, it is preferable to incorporate the method for manufacturing the spot-welded member 1 into a process for manufacturing a vehicle component. For example, the first spot welding S1 can be applied to the assembly step of the side frame, and the second spot welding S2 can be applied to the body assembly step.

In this case, first, the side frame is manufactured by performing the first spot welding S1 on the outer sheet which is the side panel and the B pillar outer which is the reinforcement material. The side frame has a constitution like a joined body 13 having two metal sheets shown in FIG. 1. The side panel of the outer sheet corresponds to the first metal sheet 111 of the joined body 13, and the B pillar outer corresponds to the first internal metal sheet group 1131 of the joined body 13. Next, the body is manufactured by performing second spot welding S2 on the side frame (joined body 13), the side sill outer, and the side sill inner. The body has a constitution like spot-welded member 1 shown in FIG. 5A. The side sill outer corresponds to the second internal metal sheet group 1132, and the side sill inner corresponds to the second metal sheet 112.

Alternatively, the side frame may be manufactured by performing the first spot welding S1 on the outer sheet, the B pillar outer, and the side sill outer. The side frame has a constitution like a joined body 13 having three metal sheets illustrated in FIG. 3. The outer sheet corresponds to the first metal sheet 111 of the joined body 13, and the B pillar outer and the side sill outer correspond to the first internal metal sheet group 1131 of the joined body 13. The internal metal sheet 113 adjacent to the first metal sheet 111 is a B pillar outer. Next, the body is manufactured by performing second spot welding S2 on the side frame (joined body 13) and the side sill inner. The body has a constitution like spot-welded member 1 shown in FIG. 4. The side sill inner corresponds to the second metal sheet 112.

In any of the examples, if the outer sheet is joined to the B pillar outer in the first spot welding S1, it is not necessary to form the nugget at the interface between the outer sheet and the B pillar outer in the second spot welding S2. The second spot welding S2 is performed with the object of joining the reinforcement members.

### (Evaluation method)

Whether or not the first indentation 1211 is spaced apart from the second indentation 1221 in the spot-welded member 1 can be usually easily determined by visually observing the surface of the first metal sheet 111. When the outer edges of the first indentation 1211 and the second indentation 1221 are unclear, the cross sections of the first nugget 121 and the second nugget 122 are observed. By cutting the spot-welded member 1 at a plan passing through the center of the first indentation 1211 and the center of the second indentation 1221 and perpendicular to the first metal sheet 111, and appropriately preparing the cut surface, the cross sections of the first nugget 121 and the second nugget 122 can be visually recognized. As shown in FIG. 2 and the like, when the first nugget 121 is spaced apart from the second nugget 122 in cross section, the first indentation 1211 is considered to be spaced apart from the second indentation 1221. In this case, it is considered that the welding point WP of the second spot welding S2 is spaced apart from the welding point WP of the first spot welding S1 in the manufacturing of the spot-welded member 1.

Whether or not the first nugget 121 is spaced apart from the second metal sheet 112 in the spot-welded member 1 is determined by observing the cross section of the first nugget 121. The spot-welded member 1 is cut at a plan passing through the center of the first indentation 1211 and perpendicular to the first metal sheet 111, and the cut surface is appropriately prepared, so that the cross section of the first nugget 121 can be visually recognized. When the second metal sheet 112 is not melted and not taken into the first nugget 121, it is determined that the first nugget 121 is spaced apart from the second metal sheet 112.

Whether or not the second nugget 122 is spaced apart from the first metal sheet 111 in the spot-welded member 1 is determined by observing the cross section of the second nugget 122. The spot-welded member 1 is cut at a plan passing through the center of the second indentation 1221 and perpendicular to the first metal sheet 111, and the cut surface is appropriately prepared, so that the cross section of the second nugget 122 can be visually recognized. When the first metal sheets 111 are not melted and not taken into the second nuggets 122, it is determined that the second nuggets 122 are spaced apart from the first metal sheets 111. In this case, it is determined that the second spot welding S2 is completed before the second nugget 122 grows up to the first metal sheet 111 in the manufacture of the spot-welded member 1.

The interval D between the center of the first indentation 1211 and the center of the second indentation 1221 can be easily measured by visually observing the surface of the first metal sheet 111 to identify the center. The interval D between the center of the first indentation 1211 and the center of the second indentation 1221 is considered to be the same as the interval D between the center of the welding point WP in the first spot welding S1 and the center of the welding point WP in the second spot welding S2.

The thickness of the first metal sheet 111, the second metal sheet 112, and the internal metal sheet 113 is measured at a position sufficiently away from the first nugget 121 and the second nugget 122. Specifically, a portion not deformed by the first spot welding S1 and the second spot welding S2 is set as a measurement place of the thickness of the metal sheet.

The Vickers hardnesses of the first metal sheet 111, the second metal sheet 112, and the internal metal sheet 113 are measured in accordance with JIS Z 2244:2009 "Vickers hardness test-Test method". The hardness measurement is performed at a position where no deformation occurs due to the first spot welding S1 and the second spot welding S2. The hardness is measured in a cross section perpendicular to the surface of the metal sheet. The indentation is formed at the t/4 position. The t/4 position is a position where the depth from the surface of the metal sheet is t/4. t is the thickness of the metal sheet. The test force is 0.5 kgf. The number of tests is three. The interval between the measurement points is set to 0.5 mm. The arithmetical mean value of the values obtained in each test is regarded as the hardness of the metal sheet.

The tensile strengths of the first metal sheet 111, the second metal sheet 112, and the internal metal sheet 113 are measured in accordance with JIS Z 2241:2011 "Metallic material -Tensile testing- Method of test". Alternatively, the tensile strength may be calculated from a Vickers hardness test. In this case, SAE J 417 is used for conversion. Examples

The effect of one aspect of the present invention is described more specifically with reference to examples. However, the conditions in the examples are merely one condition example adopted to confirm the operability and effects of the present invention. The present invention is not limited to this one condition example. The present invention can adopt various conditions as long as the object of the present invention is achieved without departing from the gist of the present invention.

### (Example 1)

Various sheet assemblies including materials 1 to 4 shown in Table 1 were spot welded to manufacture spot-welded members. In the columns of "Material 1" to "Material 4" in Table 1, the tensile strength (unit: MPa) and the thickness t (unit: mm) of the plating type and the steel sheet are described in this order.
· GA270: GA plated steel sheet, tensile strength: 270 MPa class (110 HV)
· GA980: GA plated steel sheet, tensile strength: 980 MPa class (300 HV)
· GA1180: GA plated steel sheet, tensile strength: 1180 MPa class (390 HV)
· GA1470: GA plated steel sheet, tensile strength: 1470 MPa class (460 HV)
· CR1470: Non-plated steel sheet, tensile strength 1470 MPa class (460 HV)
· A11800: Al-plated hot stamped steel sheet, tensile strength: 1800 MPa class (550 HV)

The GA plating is galvannealing.

In the sheet assembly, the material 1, the material 2, the material 3, and the material 4 were stacked in this order. The material 1 corresponds to the first metal sheet, the material 4 corresponds to the second metal sheet, and the material 2 and the material 3 correspond to the internal metal sheet. "Total thickness" described in Table 1 is the total value (unit: mm) of the thicknesses of the materials 1 to 4. The "sheet thickness ratio" described in Table 1 is a value obtained by dividing the total thickness of the sheet assembly by the thickness of the material 1.

**[Table 1]**

| | Material 1 | Material 2 | Material 3 | Material 4 | Total thickness | Sheet thickness ratio | Remarks |
|---|---|---|---|---|---|---|---|
| 1 | GA270-0.65t | GA980-1.6t | CR1470-1.6t | CR1470-1.6t | 5.45 | 8.38 | |
| 2 | GA270-0.65t | GA980-1.6t | CR1470-1.6t | CR1470-1.6t | 5.45 | 8.38 | |
| 3 | GA270-0.65t | GA980-1.6t | CR1470-1.6t | CR1470-1.6t | 5.45 | 8.38 | |
| 4 | GA270-0.65t | GA980-1.6t | CR1470-1.6t | CR1470-1.6t | 5.45 | 8.38 | |
| 5 | GA270-0.65t | GA980-1.6t | CR1470-1.6t | CR1470-1.6t | 5.45 | 8.38 | |
| 6 | GA270-0.65t | GA980-1.6t | CR1470-1.6t | CR1470-1.6t | 5.45 | 8.38 | Adhesive present |
| 7 | GA270-0.65t | GA980-1.6t | CR1470-1.6t | CR1470-1.6t | 5.45 | 8.38 | |
| 8 | GA270-0.60t | GA270-0.65t | CR1470-1.8t | CR1470-1.6t | 4.65 | 7.75 | |
| 9 | GA270-0.60t | GA270-0.65t | CR1470-1.8t | CR1470-1.6t | 4.65 | 7.75 | |
| 10 | GA270-0.60t | GA270-0.65t | CR1470-1.8t | CR1470-1.6t | 4.65 | 7.75 | |
| 11 | GA270-0.60t | GA270-0.65t | CR1470-1.8t | CR1470-1.6t | 4.65 | 7.75 | |
| 12 | GA270-0.60t | A11800-1.8t | GA1180-1.2t | Al1800-2.2t | 5.80 | 9.67 | |
| 13 | GA270-0.60t | Al1800-1.8t | GA1180-1.2t | Al1800-2.2t | 5.80 | 9.67 | |
| 14 | GA270-0.60t | Al1800-1.8t | GA1180-1.2t | Al1800-2.2t | 5.80 | 9.67 | |
| 15 | GA270-0.60t | Al1800-1.8t | GA1180-1.2t | Al1800-2.2t | 5.80 | 9.67 | |

The sheet assemblies shown in Table 1 were spot welded under the conditions shown in Table 2. In an example in which four steel sheets are joined by two spot welding, the number of the metal sheet to be subjected to the first spot welding, the sheet thickness ratio of the joined body, the welding condition of the first spot welding, the welding condition of the second spot welding, and the welding point center interval are described. The "sheet thickness ratio of the joined body" is a value obtained by dividing the total thickness of the metal sheets to be subjected to the first spot welding by the thickness of the material 1. The "interval between centers of welding points" is an interval between the center of the welding point of the first spot welding and the center of the welding point of the second spot welding. For an example in which four steel sheets are joined by one spot welding, only the welding conditions of the spot welding are described. In the column of welding conditions, the pressurizing force, the welding current value, and the welding time are described. One cycle was set to 1/50 seconds.

**[Table 2]**

| | Target of the first spot welding | Sheet thickness ratio of joined body | Welding conditions for first spot welding | Welding conditions for second spot welding | Interval between centers of welding points (mm) | Dent overlap |
|---|---|---|---|---|---|---|
| 1 | Material 1,2,3,4 | 8.38 | 400 kgf-8kA-20 cyc | Absent | - | - |
| 2 | Material 1,2 | 3.46 | 400 kgf-8 kA-20 cyc | 500 kgf-9.5 kA-25 cyc | 5 | Present |
| 3 | Material 1,2 | 3.46 | 400 kgf-8 kA-20 cyc | 500 kgf-9.5 kA-25 cyc | 12 | Absent |
| 4 | Material 1,2,3 | 5.92 | 400 kgf-8 kA-25 cyc | 500 kgf-9.5 kA-25 cyc | 12 | Absent |
| 5 | Material 1,2 | 3.46 | 400 kgf-8 kA-20 cyc | 500 kgf-9.0 kA-25 cyc | 30 | Absent |
| 6 | Material 1,2,3 | 5.92 | 400 kgf-8 kA-25 cyc | 500 kgf-9.0 kA-25 cyc | 30 | Absent |
| 7 | Material 1,2,3 | 5.92 | 400 kgf-8 kA-25 cyc | 500 kgf-11 kA-25 cyc | 30 | Absent |
| 8 | Material 1,2,3,4 | 7.75 | 500 kgf-8.0 kA-25 cyc | Absent | - | - |
| 9 | Material 1,2,3 | 5.08 | 400 kgf-8 kA-20 cyc | 500 kgf-9.0 kA-25 cyc | 10 | Absent |
| 10 | Material 1,2,3 | 5.08 | 400 kgf-8 kA-20 cyc | 500 kgf-8.0 kA-25 cyc | 48 | Absent |
| 11 | Material 1,2,3 | 5.08 | 400 kgf-8 kA-20 cyc | 500 kgf-8.0 kA-25 cyc | 70 | Absent |
| 12 | Material 1,2 | 4.00 | 400 kgf-8 kA-22 cyc | 550 kgf-10 kA-30 cyc | 6 | Present |
| 13 | Material 1,2 | 4.00 | 400 kgf-8 kA-22 cyc | 550 kgf-9.5 kA-30 cyc | 13 | Absent |
| 14 | Material 1,2,3 | 6.00 | 400 kgf-8 kA-27 cyc | 550 kgf-9.5 kA-30 cyc | 13 | Absent |
| 15 | Material 1,2 | 4.00 | 400 kgf-8 kA-22 cyc | 550 kgf-9.5 kA-30 cyc | 20 | Absent |

A spot-welded member obtained by spot welding was subjected to a chisel test prescribed in JIS Z 3144:2013 "Routine test of resistance spot and projection welds". Specifically, by press-fitting a chisel between the material 1 and the material 2 in the vicinity of the first nugget, a tensile force was applied in the sheet thickness direction of the weld. As a result, it was determined whether or not the joining strength between the material 1 and the material 2 was good. The first nugget was fractured between the material 1 and the material 2 of each test piece by driving of a chisel. Then, in accordance with the method described in JIS Z 3139 6.1 (Cross section macro test), the nugget diameters were described in a three-stage evaluation in the column of "chisel test result of faying surface between material 1 and material 2" in Table 3. The evaluation criteria were as follows. In the example evaluated as "C", it was determined that a joining failure occurred in the material 1.
· The nugget diameter is 4.25 √t (t is the thickness of the material 1) or more: A
· The nugget diameter is 3 √t or more and less than 4.25 √t: B
· The nugget diameter is less than 3√ t: C

The second nugget was also subjected to the chisel test in the same manner as the first nugget. Then, the plug diameters in the first nugget and the second nugget were measured according to JIS Z 3144:2013 "Routine test of resistance spot and projection welds". The plug diameter is the average diameter of the plug-shaped fracture portion measured after the fracture test, and the plug fracture is a mode in which the plug is fractured in a button shape at the base material portion in the nugget, the heat-affected portion, or the outside of the nugget. As a result, it was confirmed that the plug diameter of the first nugget was 4.25 √t or more (t is the thickness of the material 1) in all the present inventive examples. Further, it was confirmed that the plug diameter of the second nugget was 4.25 √t or more (t is the thickness of the material 4) in all the present inventive examples.

Thereafter, whether or not the second nugget of the spot-welded member had grown to the material 1 was confirmed by cross section observation. The observation was carried out in a cut surface passing through the center of the second indentation and perpendicular to material 1. The observation results were described in the column of "Interface nugget formation of material 1 in second spot welding". When the second nugget was formed at the interface between the material 1 and the material 2, "Present" was described in the column of "Interface nugget formation of material 1 in second spot welding", and "Absent" was described in other cases.

Further, the amount of occurrence of surface splash in the material 4 was evaluated and described in Table 3. The occurrence of surface splash in the second spot welding was evaluated by cross section observation. In the case where a trace of the weld metal of the nugget popping out toward the metal surface from the vicinity of the indentation of the second spot weld was confirmed, it was described as "NG" in the "Surface splash" column. In addition, in the case where slightly melted dust was confirmed only on the surface, "NORMAL" was described in the "Surface splash" column. In the case where neither NG nor NORMAL was determined, "GOOD" was described in the "Surface splash" column.

**[Table 3]**

| | Chisel test results for faying surface between material 1 and material 2 in first nugget | Interface nugget formation of material 1 in second spot welding | Surface splash | Remarks |
|---|---|---|---|---|
| 1 | C | - | GOOD | Comparative Example |
| 2 | A | Absent | NG | Comparative Example |
| 3 | A | Absent | GOOD | Present Inventive Example |
| 4 | A | Absent | GOOD | Present Inventive Example |
| 5 | A | Absent | GOOD | Present Inventive Example |
| 6 | A | Absent | GOOD | Present Inventive Example |
| 7 | A | Present | NG | Comparative Example |
| 8 | C | - | GOOD | Comparative Example |
| 9 | A | Absent | GOOD | Present Inventive Example |
| 10 | A | Absent | GOOD | Present Inventive Example |
| 11 | A | Absent | GOOD | Present Inventive Example |
| 12 | A | Absent | NG | Comparative Example |
| 13 | A | Absent | GOOD | Present Inventive Example |
| 14 | B | Absent | GOOD | Present Inventive |
| | | | | Example |
| 15 | A | Absent | GOOD | Present Inventive Example |

In Examples 1 and 8, materials 1 to 4 were joined by one spot welding. In these examples, joining failure of the material 1 occurred.

In Examples 2 and 12, the welding point of the second spot welding was not spaced apart from the welding point of the first spot welding. As a result, in the second spot welding of Example 2 and Example 12, the surface splash remarkably occurred.

In Example 7, a second nugget was grown to material 1 in a second spot welding. As a result, in the second spot welding of Example 7, the surface splash remarkably occurred.

In other examples, materials 1 to 4 were joined by a first spot welding and a second spot welding, the welding point of the second spot welding was spaced apart from the welding point of the first spot welding, and the second spot welding was terminated before the second nugget had grown to the first metal sheet. In these examples, there was no joining failure in the material 1, the surface splash was sufficiently suppressed, and the spot-welded member having high strength reliability was obtained.

FIG. 7A is a cross-sectional photograph of a spot-welded member of Example 3. The metal sheet of FIG. 7A includes GA270-0.65t (material 1), GA980-1.6t (material 2), CR1470-1.6t (material 3), and CR1470-1.6t (material 4) in this order from the upper side of the page. The nugget on the right side of the page of FIG. 7A is the first nugget, and the nugget on the left side of the page is the second nugget. The center interval of the welding points in the spot-welded member of FIG. 7A is 12 mm. In the manufacture of the spot-welded member in FIG. 7A, the first spot welding was performed on the material 1 and material 2.

According to FIG. 7A, it can be seen that the thin metal sheet disposed on the uppermost side of the page is reliably joined to the metal sheet adjacent thereto. In addition, according to FIG. 7A, it can also be seen that no surface splash occurred during the second spot welding.

FIG. 7B is a cross-sectional photograph of a spot-welded member of Example 4. The metal sheet of FIG. 7B includes GA270-0.65t (material 1), GA980-1.6t (material 2), CR1470-1.6t (material 3), and CR1470-1.6t (material 4) in this order from the upper side of the page. The nugget on the right side of the page of FIG. 7B is the first nugget, and the nugget on the left side of the page is the second nugget. The center interval of the welding points in the spot-welded member of FIG. 7B was 12 mm. In the manufacture of the spot-welded member in FIG. 7B, the first spot welding was performed on the material 1, material 2, and material 3.

According to FIG. 7B, it can be seen that the thin metal sheet disposed on the uppermost side of the page is reliably joined to the metal sheet adjacent thereto. In addition, according to FIG. 7B, it can also be seen that no surface splash occurred during the second spot welding.

### (Example 2: Sheet thickness ratio for second nugget)

Various sheet assemblies including the materials 1 to 4 shown in Table 4 were spot welded to manufacture spot-welded members. In the columns of "Material 1" to "Material 4" in Table 1, the tensile strength (unit: MPa) and the thickness t (unit: mm) of the plating type and the steel sheet are described in this order.

In the sheet assembly, the material 1, the material 2, the material 3, and the material 4 were stacked in this order. The material 1 corresponds to the first metal sheet, the material 4 corresponds to the second metal sheet, and the material 2 and the material 3 correspond to the internal metal sheet. The materials subjected to first spot welding are described in Table 4. In the second spot welding, the material 2, material 3, and material 4 were joined. The "Sheet thickness ratio related to the second nugget" in Table 4 is a value obtained by dividing the total thickness of the material 2 to the material 4 to be joined by the second nugget by the thickness of the second metal sheet (that is, the material 4). For convenience of description, the joint shape is described in Table 4.

**[Table 4]**

| | Material 1 | Material 2 | Material 3 | Material 4 | Target of first spot welding | Joint shape | Thickness ratio related to second nugget |
|---|---|---|---|---|---|---|---|
| A1 | GA270-0.65t | GA980-1.6t | GA980-1.6t | GA980-1.6t | Material 1, 2 | Fig. 5A | 3.00 |
| A2 | GA270-0.65t | GA980-1.6t | GA980-1.6t | GA980-1.6t | Material 1, 2, 3 | Fig. 4 | 3.00 |
| A3 | GA270-0.60t | GA270-0.65t | A11800-1.8t | CR1470-1.6t | Material 1, 2 | Fig. 5A | 2.53 |
| A4 | GA270-0.60t | GA270-0.65t | A11800-1.8t | CR1470-1.6t | Material 1, 2, 3 | Fig. 4 | 2.53 |
| A5 | GA270-0.60t | Al1800-1.8t | GA1180-1.2t | A11800-2.2t | Material 1, 2 | Fig. 5A | 2.36 |
| A6 | GA270-0.60t | A11800-1.8t | GA1180-1.2t | A11800-2.2t | Material 1, 2, 3 | Fig. 4 | 2.36 |
| A7 | GA270-0.65t | Al2000-1.2t | GA590-2.0t | GA340-1.0t | Material 1, 2 | Fig. 5A | 4.20 |
| A8 | GA270-0.65t | A12000-1.2t | GA590-2.0t | GA340-1.0t | Material 1, 2, 3 | Fig. 4 | 4.20 |
| A9 | CR270-0.70t | GA270-0.65t | A11470-1.0t | A11470-2.0t | Material 1, 2 | Fig. 5A | 1.83 |
| A10 | CR270-0.70t | GA270-0.65t | A11470-1.0t | A11470-2.0t | Material 1, 2, 3 | Fig. 4 | 1.83 |
| A11 | GA270-0.65t | Al2000-1.2t | GA590-2.0t | GA340-0.8t | Material 1, 2 | Fig. 5A | 5.00 |
| A12 | CR270-0.70t | GA270-0.65t | A11470-1.0t | A11470-2.3t | Material 1, 2, 3 | Fig. 4 | 1.72 |

**[Table 5]**

| | Welding conditions for first spot welding | Welding conditions for second spot welding | Interval between centers of welding points (mm) | Dent overlap |
|---|---|---|---|---|
| A1 | 400 kgf-8 kA-20 cyc | 500 kgf-9.0 kA-25 cyc | 15 | Absent |
| A2 | 400 kgf-8 kA-25 cyc | 500 kgf-9.0 kA-25 cyc | 15 | Absent |
| A3 | 400 kgf-8 kA-20 cyc | 450 kgf-9.0 kA-25 cyc | 20 | Absent |
| A4 | 400 kgf-8 kA-25 cyc | 450 kgf-9.0 kA-25 cyc | 20 | Absent |
| A5 | 400 kgf-8 kA-20 cyc upslope 20 cyc | 550 kgf-9.0 kA-25 cyc | 25 | Absent |
| A6 | 400 kgf-8 kA-25 cyc upslope 20 cyc | 550 kgf-9.0 kA-25 cyc | 25 | Absent |
| A7 | 400 kgf-8 kA-20 cyc | 500 kgf-8.0 kA-25 cyc | 45 | Absent |
| A8 | 400 kgf-8 kA-25 cyc | 500 kgf-8.0 kA-25 cyc | 45 | Absent |
| A9 | 400 kgf-8 kA-20 cyc | 500 kgf-9.0 kA-25 cyc | 10 | Absent |
| A10 | 400 kgf-8 kA-25 cyc | 500 kgf-9.0 kA-25 cyc | 10 | Absent |
| A11 | 400 kgf-8 kA-20 cyc | 500 kgf-8.0 kA-25 cyc | 45 | Absent |
| A12 | 400 kgf-8 kA-25 cyc | 500 kgf-9.0 kA-25 cyc | 10 | Absent |

| | | | | |
|---|---|---|---|---|
| Remarks: In A5 and A6, adhesive is present between material 1 and material 2 | | | | |

The chisel test was performed on a spot-welded member obtained by spot welding. Specifically, in the vicinity of the first nugget, a chisel was press-fitted between (1) the material 1 and the material 2 and between (2) the material 3 and the material 4 to exert a tensile force in the sheet thickness direction of the weld. As a result, it was determined whether or not the joining strength between the material 1 and the material 2 and the joining strength between the material 3 and the material 4 were good. The first nugget was fractured between the material 1 and the material 2 of each test piece by driving of a chisel. Further, the second nugget was fractured between the material 3 and material 4 of each test piece by driving of a chisel. Then, in accordance with the method described in JIS Z 3139 6.1 (Cross section macro test), the nugget diameters were described in a three-stage evaluation in the column of "chisel test result of faying surface between material 1 and material 2" in Table 6. The evaluation criteria were as follows. In the example evaluated as "C", it was determined that a joining failure occurred in the material 1.
· The nugget diameter is 4.25 √t (t is the thickness of the material 4) or more: A
· The nugget diameter is 3 √t or more and less than 4.25 √t: B
· The nugget diameter is less than 3√ t: C

Further, the amount of occurrence of surface splash in the material 4 was evaluated and described in Table 6. The occurrence of surface splash in the second spot welding was evaluated by cross section observation. In the case where a trace of the weld metal of the nugget popping out toward the metal surface from the vicinity of the indentation of the second spot weld was confirmed, it was described as "NG" in the "Surface splash" column. In addition, in the case where slightly melted dust was confirmed only on the surface, "NORMAL" was described in the "Surface splash" column. In the case where neither NG nor NORMAL was determined, "GOOD" was described in the "Surface splash" column.

**[Table 6]**

| | Chisel test results for faying surface between material 1 and material 2 in first nugget | Interface nugget formation of material 1 in second spot welding | Surface splash | Chisel test results for faying surface between material 3 and material 4 in second nugget |
|---|---|---|---|---|
| A1 | A | Absent | GOOD | A |
| A2 | A | Absent | GOOD | A |
| A3 | A | Absent | GOOD | A |
| A4 | A | Absent | GOOD | A |
| A5 | A | Absent | GOOD | A |
| A6 | A | Absent | GOOD | A |
| A7 | A | Absent | GOOD | A |
| A8 | A | Absent | GOOD | A |
| A9 | A | Absent | GOOD | A |
| A10 | A | Absent | GOOD | A |
| A11 | A | Absent | GOOD | B |
| A12 | A | Absent | NORMAL | A |

In the spot-welded members of Examples A1 to A11, the number of metal sheets to be joined by the second nugget was three or more, and the value obtained by dividing the total thickness of the metal sheets to be joined by the second nugget by the thickness of the second metal sheet was 1.8 to 4.2. In these examples, both the joint strength of the first nugget and the second joint strength were excellent, and the occurrence of splash was further suppressed.

In the spot-welded member of Example A12, the number of metal sheets to be joined by the second nugget was three or more, and the value obtained by dividing the total thickness of the metal sheets to be joined by the second nugget by the thickness of the second metal sheet was less than 1.8. In A12, surface splash with the surface melting slightly occurred. However, since A12 does not occur to the extent of surface splash affecting the strength, A12 is also regarded as an inventive example.

### (Example 3: Spot-welded member having five metal sheets)

The following five metal sheets were spot welded. The material 1 was a first metal sheet, and the material 5 was a second metal sheet.
· Material 1: GA270-0.65t
· Material 2: CR980-1.2t
· Material 3: CR980-1.2t
· Material 4: Al1800-1.6t
· Material 5: Al1800-1.6t

First, the material 1, the material 2, and the material 3 were subjected to first spot welding to form a joined body having a first nugget. Next, the material 4 and the material 5 were stacked on the material 3 of the joined body, and further subjected to second spot welding to form a second nugget for joining the materials 2, 3, 4, and 5. The welding point of the second spot welding was spaced apart from the welding point of the first spot welding. The second spot welding was also terminated before the second nugget was grown to the first metal sheet.

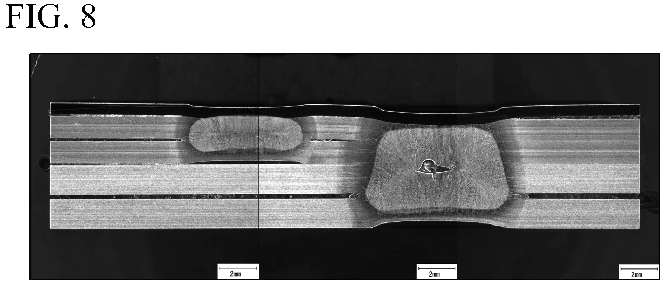

FIG. 8 shows a cross-sectional photograph of the spot-welded member obtained by the above-described procedure. In the spot-welded member of FIG. 8, joining failure was avoided. In the spot-welded member of FIG. 8, the occurrence of splash was also avoided.

### REFERENCE SIGNS LIST

S1 First spot welding
S2 Second spot welding
1 Spot-welded member
111 First metal sheet
112 Second metal sheet
113 Internal metal sheet
1131 First internal metal sheet group
1132 Second internal metal sheet group
121 First nugget
1211 First indentation
122 Second nugget
1221 Second indentation
13 Joined body
14 Faying surface
D Interval between center of first nugget and center of second nugget
E Electrode
WP welding point

## Claims

1. A spot-welded member comprising:
one first metal sheet and one second metal sheet disposed on surfaces of the spot-welded member;
a first internal metal sheet group including one or more internal metal sheets disposed between the first metal sheet and the second metal sheet;
a first spot weld having a first nugget joining the first metal sheet and the first internal metal sheet group; and
a second spot weld having a second nugget joining the second metal sheet and the first internal metal sheet group;
wherein
an indentation of the first spot weld is provided on the first metal sheet and the internal metal sheet,
an indentation of the second spot weld is provided on the first metal sheet and the second metal sheet,
the indentation of the first spot weld is spaced apart from the indentation of the second spot weld,
the first nugget is spaced apart from the second metal sheet, and
the second nugget is spaced apart from the first metal sheet.

2. The spot-welded member according to claim 1, wherein the number of the internal metal sheets constituting the first internal metal sheet group to be joined by the first nugget is two or more.

3. The spot-welded member according to claim 1 or 2, wherein
the spot-welded member has a second internal metal sheet group including one or more internal metal sheets disposed between the first internal metal sheet group and the second metal sheet,
the first nugget is spaced apart from the second internal metal sheet group,
the second nugget joins the second metal sheet, the first internal metal sheet group, and the second internal metal sheet group.

4. The spot-welded member according to claim 1 or 2, wherein an interval between a center of the indentation of the first spot weld and a center of the indentation of the second spot weld is 10 mm or more and 50 mm or less in plan view.

5. The spot-welded member according to claim 1 or 2, wherein the second metal sheet is thicker than the first metal sheet.

6. The spot-welded member according to claim 5, wherein
a value obtained by dividing a total thickness of the first metal sheet and the first internal metal sheet group to be joined by the first nugget by a thickness of the first metal sheet is less than 6.0, and
a value obtained by dividing a total thickness of the first metal sheet, the second metal sheet, and the internal metal sheet included in the spot-welded member by the thickness of the first metal sheet exceeds 6.5.

7. The spot-welded member according to claim 1 or 2, wherein
the first metal sheet, the second metal sheet, and the internal metal sheet are steel sheets,
a Vickers hardness of the first metal sheet is 150 HV or less, and
the hardness of one or more of the second metal sheet and the internal metal sheet is 300 HV or more.

8. The spot-welded member according to claim 1 or 2, wherein an adhesive is provided at one or more faying surfaces.

9. The spot-welded member according to claim 1, wherein
the number of the metal sheets to be joined by the second nugget is three or more, and
a value obtained by dividing a total thickness of the metal sheets to be joined by the second nugget by a thickness of the second metal sheet is 1.8 to 4.2.

10. A method for manufacturing a spot-welded member, the method comprising:
performing first spot welding on one first metal sheet and a first internal metal sheet group including one or more internal metal sheets stacked on each other to form a joined body having a first nugget which joins the first metal sheet and the first internal metal sheet group; and
stacking one second metal sheet on the internal metal sheet disposed on the surface of the joined body and further performing second spot welding to form a second nugget which joins the first internal metal sheet group and the second metal sheet of the joined body,
wherein
a welding point of the second spot welding is spaced apart from a welding point of the first spot welding, and
the second spot welding is terminated before the second nugget grows to the first metal sheet.

11. The method for manufacturing a spot-welded member according to claim 10, wherein the number of the internal metal sheets constituting the first internal metal sheet group to be subjected to the first spot welding is set to two or more.

12. The method for manufacturing a spot-welded member according to claim 10 or 11, wherein the second spot welding is performed by sequentially stacking a second internal metal sheet group, which includes one or more internal metal sheets, and the second metal sheet on the internal metal sheet disposed on the surface of the joined body.

13. The method for manufacturing a spot-welded member according to claim 10 or 11, wherein an interval between a center of the welding point in the first spot welding and a center of the welding point in the second spot welding is set to 10 mm or more and 50 mm or less in plan view.

14. The method for manufacturing a spot-welded member according to claim 10 or 11, wherein the second metal sheet is thicker than the first metal sheet.

15. The method for manufacturing a spot-welded member according to claim 14, wherein
a value obtained by dividing a total thickness of the first metal sheet and the first internal metal sheet group included in the joined body by a thickness of the first metal sheet is set to less than 6.0,
a value obtained by dividing a total thickness of the first metal sheet, the second metal sheet, and the internal metal sheet included in the spot-welded member by the thickness of the first metal sheet is set to more than 6.5.

16. The method for manufacturing a spot-welded member according to claim 10 or 11, wherein
the first metal sheet, the second metal sheet, and the internal metal sheet are steel sheets,
the first metal sheet has a Vickers hardness of 150 HV or less, and
the hardness of one or more of the second metal sheet and the internal metal sheet is set to 300 HV or more.

17. The method for manufacturing a spot-welded member according to claim 10 or 11, the method further comprising:
applying an adhesive to one or more of a surface of the first metal sheet and a surface of the internal metal sheet before the first spot welding,
wherein the surface to which the adhesive is applied is set as a faying surface of the joined body.

18. The method for manufacturing a spot-welded member according to claim 10 or 11, the method further comprising:
applying an adhesive to one or more of the surface of the joined body and a surface of a metal sheet stacked on the surface of the joined body before the second spot welding,
wherein the surface to which the adhesive is applied is set as a faying surface of the spot-welded member.

19. The method for manufacturing a spot-welded member according to claim 10 or 11, wherein
the number of the metal sheets to be joined by the second nugget is three or more, and
a value obtained by dividing a total thickness of the metal sheets to be joined by the second nugget by a thickness of the second metal sheet is set to 1.8 to 4.2.
